# EUROPÄISCHE PATENTANMELDUNG

(11) **EP 1 142 523 A2**
(43) Veröffentlichungstag der Anmeldung: **10.10.2001**
(21) Anmeldenummer: 00118711.1
(22) Anmeldetag: 30.08.2000
(51) Int. Cl.: A47K 3/28

(54) **Solarthermische Duschvorrichtung zum Aufstellen im Freien**

(30) Priorität: 06.04.2000 CH 6842000
(71) Anmelder: Diener, Peter, 8907 Wettswil (CH)
(72) Erfinder: Diener, Peter, 8907 Wettswil (CH)
(74) Vertreter: Schmauder, Klaus Dieter

(57) **Zusammenfassung**

Eine solarthermische Duschvorrichtung zum Aufstellen im Freien weist einen Trägerteil (2), einen Wasseranschluss (4), einen Duschkopf (6) sowie einem zwischen Wasseranschluss (4) und Duschkopf (6) angeordneten solarthermischen Kollektor (8) auf. Der Kollektor (8) ist zum Aufheizen von durch den Wasseranschluss (4) zugeführtem Wasser vorgesehen und ist aus einem im wesentlichen senkrecht angeordneten Wellrohr (8) gebildet.

## Beschreibung

### Technisches Gebiet

Die Erfindung betrifft eine solarthermische Duschvorrichtung zum Aufstellen im Freien gemäss Oberbegriff des Anspruches 1.

### Stand der Technik

Aus der DE 2842416 A1 und der zugehörigen Hauptanmeldung DE 2740378 B1 ist eine solarthermische Duschvorrichtung zum Aufstellen im Freien bekannt, welche einen Trägerteil, einen Wasseranschluss, einen Duschkopf sowie einen zwischen Wasseranschluss und Duschkopf angeordneten solarthermischen Kollektor zum Aufheizen von durch den Wasseranschluss zugeführtem Wasser aufweist. Bei dieser Duschvorrichtung beinhaltet der Kollektor eine Mehrzahl von flächig nebeneinander angeordneten Hohlprofilen, wobei diese ausgehend von einer der Wasserzufuhr dienenden gemeinsamen Verteilerleitung parallel zueinander von dem aufzuwärmenden Wasser durchströmbar sind und in eine gemeinsame, zu dem Duschkopf führende Sammelleitung münden.

Ein Nachteil der bekannten Duschvorrichtung besteht darin, dass der Kollektor als wandartiger Flachkörper mit einem im wesentlichen rechteckförmigen Querschnitt ausgebildet ist. Dies führt nicht nur zu einer komplizierten klobigen Ausbildung der Duschvorrichtung, sondern beinhaltet auch den Nachteil, dass es zur Erzielung einer optimalen Erwärmung des durchgeführten Wassers erforderlich ist, die Duschvorrichtung stets so auszurichten, dass eine Hauptfläche des wandartigen Kollektors, das heisst eine längere Seite von dessen Querschnittprofil, der Sonne zugewandt ist. Deshalb ist im Verlauf eines Tages die Ausrichtung der Duschvorrichtung wiederholt dem sich verändernden Sonnenstand anzupassen. Ein weiterer Nachteil der bekannten Duschvorrichtung ergibt sich daraus, dass der wandartig ausgebildete Kollektor eine Angriffsfläche für einfallende Winde bildet, weshalb zur Vermeidung einer Umsturzgefahr die Duschvorrichtung verankert oder zumindest beschwert werden muss. Diese Massnahmen stehen jedoch einer einfachen Transportierbarkeit der Duschvorrichtung entgegen und erschweren überdies die kontinuierliche Ausrichtung der Duschvorrichtung an den variablen Sonnenstand.

### Darstellung der Erfindung

Aufgabe der Erfindung ist es, eine Duschvorrichtung der eingangs genannten Art zu verbessern und deren Nachteile zu vermeiden.

Gelöst wird diese Aufgabe durch die im Anspruch 1 definierte Duschvorrichtung. Dadurch, dass der Kollektor aus einem Wellrohr gebildet ist, welches im wesentlichen senkrecht aufstellbar ist, bleibt im Verlauf eines Tages ein annähernd gleich grosser Anteil des Kollektors der Sonne zugewandt. Damit entfällt die Notwendigkeit, die Ausrichtung der Duschvorrichtung wiederholt dem sich verändernden Sonnenstand anzupassen. Dies stellt nicht nur eine erhöhte Benutzerfreundlichkeit dar, sondern verbessert auch die Windstabilität und damit die Standfestigkeit der Duschvorrichtung. Da ausserdem der wellrohrförmige Kollektor einen im Vergleich zu flächig ausgebildeten Kollektoren geringeren Luftwiderstand aufweist, sind die Anforderungen an die windfeste Verankerung oder Beschwerung der Duschvorrichtung geringer. Durch die wellrohrförmige Gestalt des Kollektors ergibt sich bei vorgegebenen Aussenabmessungen ein erhöhtes Verhältnis von Oberfläche zu Volumen und dadurch ein verbesserter solarthermischer Wirkungsgrad. Im übrigen ermöglicht die wellrohrförmige Ausbildung eine kompakte und ästhetisch ansprechende Erscheinungsform der Duschvorrichtung.

Vorteilhafte Ausgestaltungen der Duschvorrichtung sind in den abhängigen Ansprüchen beschrieben.

Grundsätzlich kann das Wellrohr starr ausgebildet sein und erforderlichenfalls sowohl als Kollektor wie auch als Trägerteil wirken. Bei der Ausgestaltung nach Anspruch 2 ist das Wellrohr biegsam ausgebildet und kann insbesondere aus einem Kunstoff, beispielsweise aus Hartpolyäthyhlen bestehen.

Gemäss Anspruch 3 umfasst der Trägerteil zwei Trägerelemente, an denen das Wellrohr angeordnet ist, wobei diese gemäss Anspruch 4 als Längsrohre ausgebildet sind. Beispielsweise sind die Längsrohre aus einem nichtrostenden Edelstahl gefertigt.

Grundsätzlich kann der Duschkopf ausschliesslich mit dem Kollektor verbunden sein, wobei dann eine Regelung der Wassertemperatur am Duschkopf nicht möglich ist. Bei der Ausgestaltung nach Anspruch 5 kann ein Teil des zugeführten Wassers in den solarthermischen Kollektor eingespeist werden, um danach einem Warmwasseranschluss des Duschkopfes zugeführt zu werden, während der übrige Teil des zugeführten Wassers unter Umgehung des Kollektors zu einem Kaltwasseranschluss des Duschkopfes zuführbar ist. Dadurch, dass in den beiden Verbindungsleitungen zwischem erstem und zweitem Längsrohr je ein regulierbares Absperrorgan vorgesehen ist, lässt sich sowohl das Mischverhältnis von Warm- und Kaltwasser wie auch die Gesamtmenge des pro Zeiteinheit aus dem Duschkopf tretenden Wassers einstellen.

Gemäss den Ansprüchen 6 und 7 weist die Duschvorrichtung einen Kopfteil beziehungsweise einen Fussteil auf, welche das Wellrohr und die Längsrohre verbinden und Zufuhrkanäle für den Duschkopf beziehungsweise einen Anschlusskanal für den Kollektor enthalten. Damit ergibt sich eine kompakte und ästhetisch ansprechende Gesamtkonstruktion sowie eine kostengünstige Produktionsweise.

Um dem Benutzer der Duschvorrichtung einen bequemen Zugang zu gewähren, ist es vorteilhaft, wenn der Duschkopf über einem freien, das heisst nicht durch Teile der Duschvorrichtung belegten Bodenteil angeordnet ist. Gemäss Anspruch 8 wird dies in vorteilhafter Weise dadurch erreicht, dass Trägerteil und Kollektor in Richtung des Duschkopfes geneigt ausgebildet sind, wobei dies vorzugsweise mit einer gebogenen Form von Trägerteil und Kollektor bewerkstelligt wird.

Grundsätzlich kann die Duschvorrichtung mittels geeigneter Verankerungsmittel im Boden verankert werden. Bei der Ausgestaltung nach Anspruch 9 ist die Duschvorrichtung durch entsprechende Dimensionierung des Trägerteils und/oder des Fussteils selbststehend ausgebildet.

### Kurze Beschreibung der Zeichnungen

Ausführungsbeispiele der Erfindung werden nachfolgend anhand der Zeichnungen näher beschrieben, dabei zeigen:
- Figur 1: eine Duschvorrichtung in frontaler Ansicht;
- Figur 2: die Duschvorrichtung der Figur 1 in seitlicher Ansicht;
- Figur 3: den Fussteil der Duschvorrichtung der Figur 1 in Draufsicht;
- Figur 4: das Leitungsdiagramm der Duschvorrichtung der Figur 1.

### Wege zur Ausführung der Erfindung

Die in den Figuren dargestellte solarthermische Duschvorrichtung zum Aufstellen im Freien weist einen Trägerteil 2, einen Wasseranschluss 4 und einen Duschkopf 6 auf. Ein im wesentlichen senkrecht angeordnetes Wellrohr 8 bildet einen mit dem Duschkopf 6 verbundenen solarthermischen Kollektor zum Aufheizen von durch den Wasseranschluss 4 zugeführtem Wasser. Der Trägerteil 2 beinhaltet zwei Längsrohre 10, 12, die durch einen Fussteil 14 sowie einen Kopfteil 16 zusammengehalten sind, wobei der Kopfteil 16 überdies den Duschkopf 6 trägt.

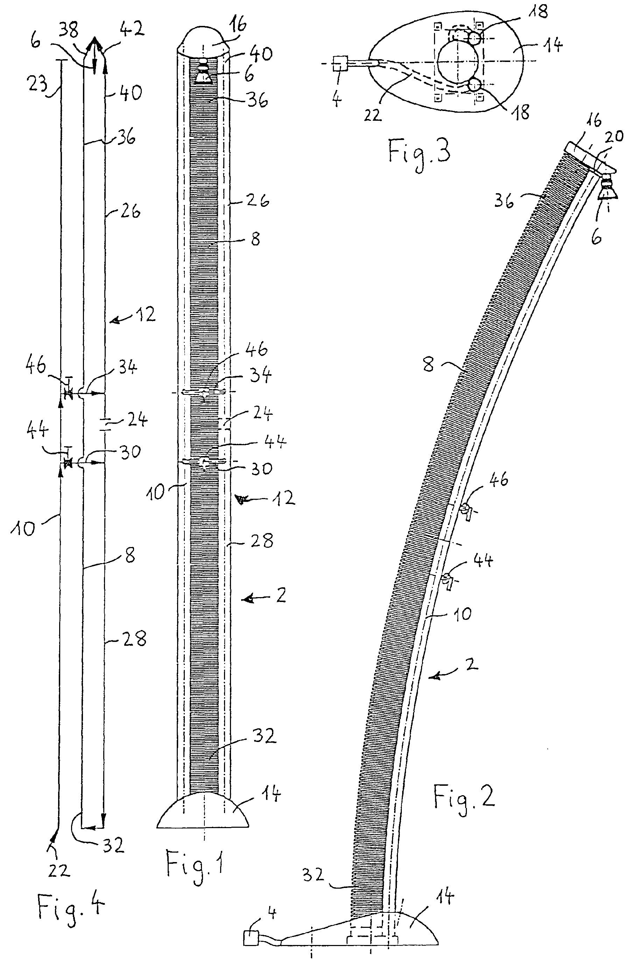

Vorteilhafterweise besteht das Wellrohr 8 aus einem biegsamen, UV-beständigen Kunststoffschlauch, beispielsweise Hartpolyäthylenschlauch, der in einer durch die Längsrohre 10, 12 definierten Ausrichtung angeordnet ist. Wie aus der Figur 2 hervorgeht, sind die Längsrohre 10, 12 und das Wellrohr 8 in Richtung des Duschkopfes 6 gebogen ausgebildet, so dass die senkrechte Projektion des Duschkopfes 6 mit Abstand vom Fussteil 14 angeordnet ist. Vorzugsweise sind die Längsrohre 10, 12 aus einem nichtrostenden Edelstahl gefertigt, wodurch sich eine gute mechanische Stabilität und Korrosionsbeständigkeit sowie ein ästhetisch ansprechendes Erscheinungsbild ergibt. Der Fussteil 14 ist aus tiefgezogenem Kunststoff gebildet, wofür vorzugsweise Acrylnitril-Butadien-Styrol-Copolymer, auch ABS-Kunststoff genannt, verwendet wird. Der Kopfteil 16 ist beispielsweise aus extrudiertem Polyäthylen gefertigt. Der Fussteil 14 und der Kopfteil 16 sind mit Metallbuchsen 18 bzw. 20 versehen, in welche die jeweiligen Enden der Längsrohre 10, 12 mittels O-Ringen abgedichtet befestigt sind. Gegebenenfalls können das Wellrohr und der Kollektor und/oder der Kopfteil und/oder der Fussteil aus Metall, vorzugsweise nichtrostendem Stahl bestehen. Der Kopfteil beziehungsweise der Fussteil können dabei als Gusskörper ausgebildet sein.

Die im gezeigten Ausführungsbeispiel verwendete Wasserführung wird nachfolgend insbesondere anhand des Leitungsschemas der Figur 2 näher beschrieben. Der zur Aufnahme von zugeführtem, ungeheiztem Leitungswasser vorgesehene Wasseranschluss 4 ist mittels eines Anschlusskanals 22 mit dem unteren Ende des ersten Längsrohres 10 verbunden, das am oberen Ende 23 geschlossen ist. Das zweite Längsrohr 12 ist durch ein Trennelement 24 in einen oberen Rohrteil 26 und einen unteren Rohrteil 28 unterteilt. Eine erste Verbindungsleitung 30 verbindet das erste Längsrohr 10 mit dem unteren Rohrteil 28 des zweiten Längsrohres 12, welcher mit dem unteren Ende 32 des Wellrohres 8 verbunden ist. Eine zweite Verbindungsleitung 34 verbindet das erste Längsrohr 10 mit dem oberen Rohrteil 26 des zweiten Längsrohres 12. Das obere Ende 36 des Wellrohres 8 ist mittels eines ersten Zufuhrkanals 38 mit einem Warmwasseranschluss des Duschkopfes 6 verbunden, und das obere Ende 40 des oberen Rohrteils 26 ist mittels eines zweiten Zufuhrkanals 42 mit einem Kaltwasseranschluss des Duschkopfes 6 verbunden. Ein in der ersten Verbindungsleitung 30 angeordnetes regulierbares Absperrorgan 44 ist zur Regelung der in das Wellrohr 8 zugeführten Wassermenge vorgesehen. Es ist unmittelbar ersichtlich, dass am oberen Ende 36 des Wellrohres 8 eine der zugeführten Wassermenge entsprechende Menge am durch solarthermische Einwirkung aufgeheiztem Wasser in den Warmwasseranschluss des Duschkopfes 6 geleitet wird. Ein in der zweiten Verbindungsleitung 34 angeordnetes regulierbares Absperrorgan 46 ist zur Regelung der über den Rohrteil 26 dem Kaltwasseranschluss des Duschkopfes 6 zugeführten Wassermenge vorgesehen. Anhand der regulierbaren Absperrorgane, lässt sich sowohl das Mischverhältnis von Warm- und Kaltwasser wie auch die Gesamtmenge des pro Zeiteinheit aus dem Duschkopf tretenden Wassers einstellen.

Im gezeigten Beispiel weist das Wellrohr 8 einen Inhalt von ungefähr 20 Liter auf, wobei die in der warmen Jahreszeit erreichbare Wassertemperatur im Wellrohr 8 ungefähr 50°C beträgt. Der im Fussteil 14 angeordnete Anschlusskanal 22 wie auch die im Kopfteil 16 angeordneten Zufuhrkanäle 38, 42 können als eingezogene Schläuche ausgebildet sein. Alternativ können die besagten Kanäle direkt in den Kopf- bzw. Fussteil geformt sein. Dank der gebogenen Ausbildung der Längsrohre 10, 12 und des Wellrohres 8 gemäss der Figur 2 kann der Duschteil senkrecht nach unten auf eine direkt darunter stehende duschende Person gerichtet sein. Demgegenüber ist bei Duschvorrichtungen mit senkrecht verlaufenden Längsrohren und Wellrohr der Duschkopf entsprechend schräg auszurichten.

Bei der in den Figuren 1 bis 3 dargestellten selbststehenden Ausführungsform ist der Fussteil 14 zwecks Gewährleistung einer genügenden Wind- und Kippstabilität mit einer ausreichenden Standfläche und einem angemessenen Gewicht zu versehen. Alternativ kann der Fussteil mittels geeigneter Verankerungsmittel wie Heringen im Boden oder mittels Befestigungsschrauben auf einer Bodenplatte verankert werden.

### Bezugszeichenliste

- 2: Trägerteil
- 4: Wasseranschluss
- 6: Duschkopf
- 8: Wellrohr
- 10: erstes Längsrohr
- 12: zweites Längsrohr
- 14: Fussteil
- 16: Kopfteil
- 18: Buchse von 14
- 20: Buchse von 16
- 22: Anschlusskanal für 4
- 23: oberes Ende von 10
- 24: Trennelement von 12
- 26: oberer Rohrteil von 12
- 28: unterer Rohrteil von 12
- 30: erste Verbindungsleitung
- 32: unteres Ende von 8
- 34: zweite Verbindungsleitung
- 36: oberes Ende von 8
- 38: Zufuhrkanal (Warmwasser) für 6
- 40: oberes Ende von 26
- 42: Zufuhrkanal (Kaltwasser) für 6
- 44: regulierbares Absperrorgan von 30
- 46: regulierbares Absperrorgan von 34

## Patentansprüche

1. Solarthermische Duschvorrichtung zum Aufstellen im Freien, mit einem Trägerteil (2), einem Wasseranschluss (4), einem Duschkopf (6) sowie einem zwischen Wasseranschluss (4) und Duschkopf (6) angeordneten solarthermischen Kollektor (8) zum Aufheizen von durch den Wasseranschluss (4) zugeführtem Wasser, **dadurch gekennzeichnet, dass** der Kollektor aus einem im wesentlichen senkrecht angeordneten Wellrohr (8) gebildet ist.

2. Duschvorrichtung nach Anspruch 1, **dadurch gekennzeichnet, dass** das Wellrohr (8) biegsam ausgebildet und durch den Trägerteil (2) gehaltert ist.

3. Duschvorrichtung nach Anspruch 2, **dadurch gekennzeichnet, dass** der Trägerteil (2) zwei Trägerelemente (10, 12) umfasst, an denen das Wellrohr (8) angeordnet ist.

4. Duschvorrichtung nach Anspruch 3, **dadurch gekennzeichnet, dass** die Trägerelemente als Längsrohre (10, 12) ausgebildet sind.

5. Duschvorrichtung nach Anspruch 4, **dadurch gekennzeichnet, dass** sie wie folgt ausgebildet ist:
der Wasseranschluss (4) ist mit einem ersten (10) der beiden Längsrohre verbunden, und das zweite Längsrohr (12) ist durch ein Trennelement (24) in einen oberen Rohrteil (26) und einen unteren Rohrteil (28) unterteilt;
eine erste Verbindungsleitung (30) verbindet das erste Längsrohr (10) mit dem unteren Rohrteil (26), welcher mit dem unteren Ende (32) des Wellrohres (8) verbunden ist, wobei das obere Ende (36) des Wellrohres (8) mit einem Warmwasseranschluss des Duschkopfes (6) verbunden ist;
eine zweite Verbindungsleitung (34) verbindet das erste Längsrohr (10) mit dem oberen Rohrteil (26), der mit einem Kaltwasseranschluss des Duschkopfes (6) verbunden ist;
wobei beide Verbindungsleitungen (30, 34) ein regulierbares Absperrorgan (44, 46) enthalten.

6. Duschvorrichtung nach einem der Ansprüche 1 bis 5, **dadurch gekennzeichnet, dass** sie einen Kopfteil (16) aufweist, welcher das Wellrohr (8) und die Längsrohre (10, 12) verbindet, den Duschkopf (6) trägt und Zufuhrkanäle (38, 42) für den Duschkopf (6) enthält.

7. Duschvorrichtung nach einem der Ansprüche 1 bis 6, **dadurch gekennzeichnet, dass** sie einen Fussteil (14) aufweist, welcher das Wellrohr (8) und die Längsrohre (10, 12) verbindet und einen Anschlusskanal (22) für den Wasseranschluss (4) enthält.

8. Duschvorrichtung nach einem der Ansprüche 1 bis 7, **dadurch gekennzeichnet, dass** Trägerteil (2) und Wellrohr (8) in Richtung des Duschkopfes (6) geneigt, vorzugsweise gebogen, ausgebildet sind derart, **dass** die senkrechte Projektion des Duschkopfes (6) mit Abstand vom Fussteil (14) angeordnet ist.

9. Duschvorrichtung nach einem der Ansprüche 1 bis 8, **dadurch gekennzeichnet, dass** sie selbststehend ausgebildet ist.
